# EUROPEAN PATENT SPECIFICATION

(11) **EP 3 219 474 B1**
(45) Date of publication and mention of the grant of the patent: **08.05.2019**
(21) Application number: 16160730.4
(22) Date of filing: 16.03.2016
(51) Int. Cl.: B29C 70/38, B29C 67/00, B29C 35/08

(54) **METHOD AND DEVICE FOR 3D-PRINTING A FIBER REINFORCED COMPOSITE COMPONENT BY TAPE-LAYING**
VERFAHREN UND VORRICHTUNG ZUM 3D-DRUCK EINER KOMPONENTE IN FASERVERBUNDBAUWEISE IM BANDABLAGEVERFAHREN
PROCÉDÉ ET DISPOSITIF A POSER DES BANDES POUR FABRIQUER EN 3D UN COMPOSANT COMPOSITE RENFORCÉ PAR FIBRES

(43) Date of publication of application: 20.09.2017
(73) Proprietor: Airbus Operations GmbH, 21129 Hamburg (DE)
(72) Inventor: HIRANO, Yoshiyasu, Tokyo 181-015 (JP); LINDE, Peter, 21614 Buxtehude (DE); HEGENBART, Matthias, 21702 Ahlerstedt (DE); SCHÖNKE, Jan, 21129 Hamburg (DE)
(74) Representative: Isarpatent

(56) References cited:
- US-A- 5 049 720
- US-A1- 2002 112 804
- US-A1- 2006 048 881
- US-A1- 2014 174 632
- US-A1- 2015 034 247

## Description

The present invention pertains to a 3D-printing method for manufacturing a fiber reinforced composite component according to claim 1 and a 3D printer according to claim 7.

3D printing or additive manufacturing (AM) provides extraordinary design freedom and hence it is widely used for manufacturing with multiple applications in engineering, construction, industrial design, automotive industries, and aerospace industries. Amongst various advantages, it offers the possibility to integrally form even structurally complex components in a cost-efficient and straightforward manner. Commercially available devices for additively manufacturing three dimensional objects, so-called 3D printers, are able to form components made from plastic and/or metal. However, the vast majority of these 3D printers are only able to print "unreinforced" components such that one usually has to rely on more conventional processes for the fabrication of fiber reinforced composite structures. Such conventional processes comprise, for example, lay-up methods, filament winding, (compression) molding and similar.

Very recently, first solutions have been proposed that are able to print plastic components with fibers implemented as reinforcements. Prior art document US 2015/0165666 A1 discloses for example a fused filament fabrication method (FFF, also called fused deposition modelling, FDM), wherein fiber reinforced components are manufactured by co-extruding a polymer filament and a fiber filament from a nozzle. Both filaments are heated within the nozzle such that they are coupled before being deposited. As another example, prior art documents US 9,126,367 B1, US 9,156,205 B2, US 9,186,846 B1, US 9,186,848 B2 and US 2014/0361460 A1 teach 3D printers and 3D-printing methods that deposit reinforced filaments layer-by-layer, the reinforced filaments consisting of a fiber tow core with a plurality of individual fibers, e.g. a 1k tow of 1000 individual carbon fibers, and a matrix material surrounding the core. The filament is heated to a temperature greater than the melting temperature of the matrix material and less than a melting temperature of the core prior to applying the filament from the conduit nozzle. Prior art documents US 20150034247 A1 and US 20060048881 A1 disclose automated lay-up methods and systems for manufacturing fiber-reinforced composite structures.

However, there is a need to provide reliable solutions for additively manufacturing fiber reinforced components in a time- and cost-efficient manner.

This object is achieved by a 3D-printing method having the features of claim 1 and a 3D printer having the features of claim 8.

According to a first aspect of the disclosure, a 3D-printing method for manufacturing a fiber reinforced composite component comprises supplying a spread tow tape containing a plurality of reinforcing fibers from a tape supply to a merging station; supplying a plurality of matrix material filaments from a multi-filament supply to the merging station; pressing together the plurality of matrix material filaments with the spread tow tape at the merging station; heating the spread tow tape together with the plurality of matrix material filaments at the merging station to a melting temperature of the matrix material filaments to form an impregnated fiber ply; and depositing the impregnated fiber ply in layers onto a print bed to form the fiber reinforced composite component.

According to a second aspect of the disclosure, a 3D printer for manufacturing a fiber reinforced composite component comprises a tape supply configured to supply a spread tow tape containing a plurality of reinforcing fibers; a multi-filament supply configured to supply a plurality of matrix material filaments; a merging station configured to receive the spread tow tape from the tape supply, to receive a plurality of matrix material filaments from the multi-filament supply, to press together the plurality of matrix material filaments with the spread tow tape, and to heat the spread tow tape together with the plurality of matrix material filaments to a melting temperature of the matrix material filaments to form an impregnated fiber ply; and a primary print head configured to receive the impregnated fiber ply from the merging station and to deposit the impregnated fiber ply in layers onto a print bed to form the fiber reinforced composite component.

One idea of the present disclosure is to utilize spread tow tapes instead of extruding individual fiber filaments (or fiber tows or even individual fibers) from one single nozzle. Using spread tow tapes can significantly speed up the additive manufacturing of fiber reinforced composite components as a flat, thin material layer comprising many individual fibers may be applied in one process step. Specifically, a spread tow tape comprising a plurality of reinforcing fibers may be merged with a plurality of matrix material filaments to form one impregnated fiber ply which is then applied in one single printing process step. This opens up the possibility to vastly increase the printing speed, e.g. considered in deposited material per time (for example, expressed as deposited areal weight per second or covered material layer per second), as spread tow tapes of dry fibers may be feed at high speed to a print head. To this end, the matrix material filaments may be processed at exactly the same speed as the spread tow tape.

Conventional methods based on the extrusion of individual filaments are extremely slow, as only one continuous filament is extruded at a time. Furthermore, the filaments employed in conventional methods are typically proprietary and very expensive. Often single fiber tows of 1k or more fibers are utilized, which are relatively large and hence cannot provided the evenness and smoothness as it is known from conventional lay-up process and the like, where individual fiber tapes of thin unidirectional (UD) layers are placed on top of each other. Spread tow tapes on the other hand are fabricated by spreading tows of desired dry fiber type into flat UD tapes of certain areal weight and width by using mechanical or electromagnetic spreading techniques. The spreading of tows enables producing UD tapes of very low areal weight and very thin width while maintaining consistency of width. In principle, these tapes may be processed further by interlacing tapes of desired fibers to obtain a fabric with straight orientation of fibers, e.g. in the sense of a cross plied UD tape. As a result, one arrives at spread tow tapes that may serve as a reinforcement with the mechanical performance of conventional cross plied UD lay ups and the ease of handling of a fabric.

Spread tow tapes within the meaning of the disclosure generally comprise tapes of spread fiber tows and, thus, include UD spread tows as well as spread tow fabrics from interlaced spread tows. Spread tow tapes are commercially available with very small areal weights, e.g. 10 to 20 g/m² or less, and in large spools, which costs much less than proprietary fiber-integrated filaments. Spread tow tapes are extremely suitable as fiber reinforcements as they can be accessed and submerged fully with resin. To this end, the present disclosure provides matrix material filaments, e.g. made of a thermoplastic, a resin or another suitable material, which are pressed against the spread tow tape and merged with it in viscous form by melting the matrix material filaments. Here, the matrix material filaments may be pressed against the spread tow tape from one side only or from two sides at the same time, thus creating one-sided or two-sided impregnated fiber plies.

In general, aspects of the disclosure offer great advantages for 3D printing or AM technology since 3D components may be printed without the additional need for subjecting the components or objects to further processing steps such as milling, cutting or drilling. This allows for a more efficient, material saving and time saving manufacturing process. Particularly advantageous in general is the reduction of costs, weight, lead time, part count and manufacturing complexity coming along with employing AM technology for printing objects used for, employed in or being part of vehicles, e.g. landborne, waterborne or airborne vehicles. Moreover, the geometric and functional shape of the printed components or objects may be flexibly designed with regard to the intended technical purpose of parts or regions of the component/object.

Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods, generally termed as 3D printing techniques. Those systems are used for generating three-dimensional objects based on digital model data by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed. 3D printing is currently used for prototyping and distributed manufacturing with multiple applications in engineering, construction, industrial design, automotive industries and aerospace industries.

Advantageous embodiments and improvements of the present invention are found in the subordinate claims.

According to an embodiment of the 3D-printing method, the spread tow tape may be heated together with the plurality of matrix material filaments by a laser beam. Accordingly, an embodiment of the 3D printer may further comprise a laser configured and arranged to transmit a laser beam onto the spread tow tape and the plurality of matrix material filaments within the merging station to heat the spread tow tape and the plurality of matrix material filaments. Hence, in this embodiment, the matrix material filaments may be melted in a very cost-efficient and controlled manner, as the temperature may be steered precisely with the laser.

According to an embodiment of the 3D-printing method, the plurality of matrix material filaments may be pressed together with the spread tow tape between two pressing plates. Accordingly, an embodiment of the 3D printer may further comprise two pressing plates configured and arranged to press together the plurality of matrix material filaments with the spread tow tape within the merging station. The two pressing plates thus form a kind of tunnel to guide and feed the matrix material filaments together with the spread tow tape and to press these together in a controlled manner.

According to an embodiment of the 3D-printing method, the laser beam may be transmitted to the spread tow tape and the plurality of matrix material filaments by passing through at least one of the two pressing plates. Accordingly, in an embodiment of the 3D printer, at least one of the pressing plates may be formed transparently to transmit the laser beam. For example, one or both pressing plates may be formed from a transparent glass or glass-like material, through which a laser beam is able to pass. Hence, the two pressing plates define a space between them where the matrix material filaments are pressed together with the spread tow tape and where both are heated up in order to merge them together to form one single impregnated fiber ply for applying to the print bed.

According to an embodiment of the 3D-printing method, the impregnated fiber ply may be deposited by pressing down the impregnated fiber ply with an ironing device. Accordingly, in an embodiment of the 3D printer, the primary print head may include an ironing device configured to press down the impregnated fiber ply onto the print bed. The ironing device may particularly be configured to heat up such that the impregnated fiber ply is pressed against the print bed and/or the already deposited fiber reinforced material in a molten or fluid or semi-fluid condition. This allows a smooth, unbroken buildup of an integral component without any gaps, voids or cavities or the like.

According to an embodiment of the 3D-printing method, the impregnated fiber ply may be cut off above or at the ironing device with a cutting device. Accordingly, in an embodiment of the 3D printer, the 3D printer and/or the primary print head may include a cutting device configured to cut off the impregnated fiber ply above or at the ironing device.

The 3D-printing method further comprises preforming the print bed on a print table using an additive manufacturing, AM, or 3D printing technique. Accordingly, the 3D printer further comprises a secondary print head configured to form the print bed on a print table using an additive manufacturing, AM, or 3D printing technique. For example, the secondary print head may be configured as a FDM print head or similar, which is able to form a three dimensional plastic or metal component without fiber reinforcements. In order to print fiber reinforced components that include fiber reinforcements in a non-planar orientation, i.e. orientated at an angle with respect to a flat horizontal print bed or print table, angled or curved print beds may be printed with such a secondary print head. For example, the secondary print head may be situated in front of the primary print head or, alternatively, may be a completely standalone print head mechanically separated from the primary print head. Hence, the print bed may be printed in advance to the printing of the actual component with the primary print head or, alternatively, the print bed may be printed in parallel, i.e. simultaneously, with the component. The print bed, i.e. the build plate of the 3D printer on which parts are actually made, is hence printed itself, e.g. it may be formed from a plastic and/or a metal material. For example, a fiber reinforced composite component may be formed in the shape of an L, wherein in both segments of the L, i.e. horizontal and vertical segment, reinforcement may be included.

According to an embodiment of the 3D-printing method, the impregnated fiber ply may be deposited in the composite layers onto the print bed by moving along a curved deposition surface of the print bed. Accordingly, in an embodiment of the 3D printer, the primary print head may be configured tiltably such that the impregnated fiber ply can be deposited on the print bed along a curved deposition surface of the print bed. This primary print head may be used, for example, to deposit the impregnated fiber ply on an angled or curved support bed that was printed before or is printed in parallel. Hence, the primary print head may be configured to automatically follow a predetermined component geometry given in the printing software.

According to an embodiment of the 3D-printing method, the 3D-printing method may further comprise preheating the print bed with a print bed heating. Accordingly, an embodiment of the 3D printer may further comprise a print bed heating configured to preheat the print bed. A heated print bed improves printing quality by helping to prevent warping and similar effects, i.e. unwanted deformations of the components stemming from uneven shrinking of the plastic material during cooling. Printing on a heated bed allows the printed part to stay warm during the printing process and allow more even shrinking of the plastic as it cools below the melting point. Heated beds usually yield higher quality finished builds.

According to an embodiment of the 3D printer, the matrix material filaments may be formed from a thermoplastic material. Thermoplastic materials are particularly suited in combination with thin and flat spread tow tapes and offer the opportunity to form impregnated fiber plies of high quality and structural integrity in a straightforward and cost-efficient manner. Suited thermoplastic materials comprise organic thermoplastic polymers as for example polyaryletherketones, in particular polyetheretherketone (PEEK), polyetherketoneketone (PEKK) or the like. These are characterized by light weight, high temperature resistance, mechanical strength and chemical resistance and are thus often used in the transport industry but also in more general mechanical engineering.

According to an embodiment of the 3D printer, the spread tow tapes may consist of a plurality of dry reinforcing fibers, each reinforcing fiber being selected from the group consisting of carbon fibers, aramid fibers and glass fibers.

According to an embodiment of the 3D printer, the 3D printer may further comprise an automated quality control system configured to assess at least one quality parameter of the 3D-printing process of the 3D printer and to control the 3D printer based on the at least one quality parameter. The automated quality control system may include a control device and sensor device. The sensor device may be configured to record sensor data of the 3D-printing process. The control device may be configured to determine and evaluate the at least one quality parameter of the 3D-printing process based on the recorded sensor data. The control device may be further configured, if the evaluated at least one quality parameter matches or deviates from predefined printing constraints, to control the 3D printer based on the evaluation of the at least one quality parameter. The sensor device may for example be configured as an infrared sensor, an acoustic sensor, a visual sensor, e.g. for analyzing video information, an acceleration sensor, a heat sensor, a triangulation sensor or similar. For example, the sensor device may be configured to monitor the noise level or the energy consumption of the 3D printer or of the laser beam, or to detect distortions, debonding from plate, misalignment, cracking, discoloration, dislocation, delamination, stress induced fractures and deformations, residual stress, printed part orientation, or support structure orientation, etc.

The disclosure will be explained in greater detail with reference to exemplary embodiments depicted in the drawings as appended.

The accompanying drawings are included to provide a further understanding of the present disclosure and are incorporated in and constitute a part of this specification. The drawings illustrate the embodiments of the present disclosure and together with the description serve to explain the principles of the disclosure. Other embodiments and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Figs. 1a and 1b schematically illustrate a 3D printer for manufacturing a fiber reinforced composite component (perspective view in Fig. 1a and cross sectional view in Fig. 1b).
Fig. 2 shows a flow diagram of a 3D-printing method for manufacturing a fiber reinforced composite component with the 3D printer of Figs. 1a and 1b .
Figs. 3a-3c schematically illustrate exemplary steps of a 3D-printing method according to Fig. 2.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

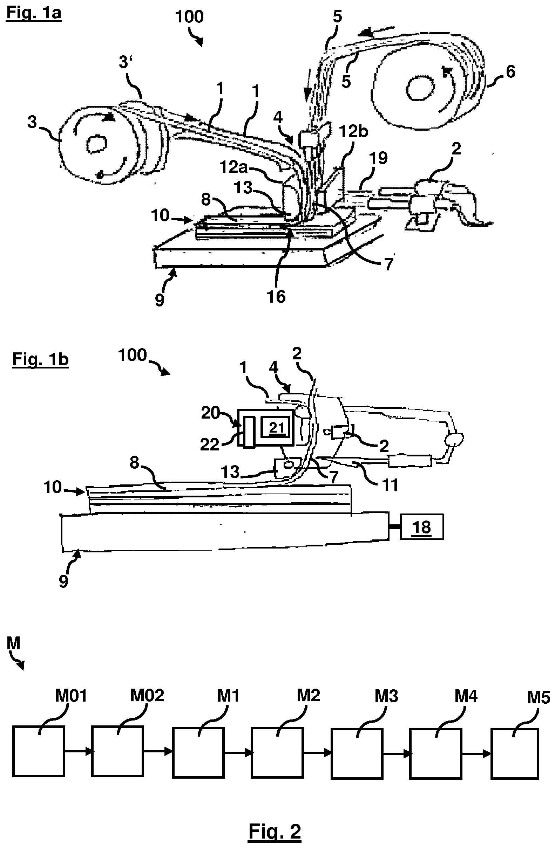

Referring to Figures 1a and 1b, a 3D printer 100 for manufacturing a fiber reinforced composite component 10 according to an embodiment is schematically illustrated. Specifically, Fig. 1a shows the 3D printer 100 in perspective view, while Fig. 1b shows the 3D printer 100 in cross sectional view.

The fiber reinforced component 10 may be any three dimensional fiber reinforced structure or object that can be formed by depositing material in layers on a print table. For illustration purposes only, Figs. 1a and 1b schematically depict a flat rectangular fiber reinforced component 10. The fiber reinforced component 10 may be configured, for example, for use in the transport industry, e.g. in landborne, waterborne or airborne vehicles. The fiber reinforced component 10 is formed of composite layers 8 of impregnated fiber plies 7, which are feed from a primary print head 16 of the 3D printer 100. To this end, the composite layers 8 are selectively deposited layer by layer on a print bed 9 on top each other, where they subsequently consolidate to form one single fiber reinforced composite component 10.

Fig. 2 shows a flow diagram of a 3D-printing method M for manufacturing a fiber reinforced composite component 10 as used in the 3D printer 100 of Figs. 1a and 1b. The 3D-printing method M generally comprises under M1 supplying a spread tow tape 1 containing a plurality of reinforcing fibers from a tape supply 3, 3' to a merging station 4 (cf. Figs. 1a and 1b). Spread tow tapes 1 are fabricated by spreading tows of a dry fiber type, e.g. carbon fibers, aramid fibers, or glass fibers or combinations thereof, into flat tapes of certain areal weight and width by using mechanical or electromagnetic spreading techniques. In addition, these tapes may be processed further by interlacing or interweaving the tapes to obtain a fabric with various orientations of fibers. Spread tow tapes 1 generally comprise tapes of spread fiber tows and, thus, include unidirectional spread tows as well as spread tow fabrics from interlaced or interwoven spread tows. The spread tow tape 1 is provided in Fig. 1a from two distinct tape supplies 3, 3', which are both configured as spools. A first tape supply 3 provides a spread tow tape 1 with large width, while a second tape supply 3' provides a spread tow tape 1 with smaller width. The different widths may be optimized for various purposes. For example, the larger width may be chosen for general printing of large area portions of the fiber reinforced component 10, while the smaller width may be optimized for printing of edges of the fiber reinforced component 10 or other more delicate portions that require a fine adjustment of the fiber placement and fiber orientation. The depicted variant of the 3D printer 100 with two tape supplies 3, 3' is chosen for illustrative purposes only and the person of skill will readily acknowledge that many other variants may be advantageous depending on the specific application at hand. For example, one single tape supply 3 may be sufficient for most applications, while other use cases may require a multitude of tape supplies 3, 3' providing different types of spread tow tapes 1.

Still referring to Fig. 2, the method M further comprises under M2 supplying a plurality of matrix material filaments 5 from a multi-filament supply 6 to the merging station 4. The matrix material filaments 5 may be formed of a thermoplastic, a resin or another suitable material that may be melted to form the matrix of the fiber reinforced composite component 10. Suited thermoplastic materials comprise organic thermoplastic polymers as for example polyaryletherketones, in particular polyetheretherketone (PEEK), polyetherketoneketone (PEKK) or the like. The multi-filament supply 6 is configured as a spool that provides a plurality of individual filaments. However, other variants may be provided in accordance with the principles of the present disclosure, which are based on different configurations. For example, the multi-filament supply 6 may not be configured as one single spool, but as an arrangement of a multitude of separate spools, possibly providing various different kinds of matrix materials.

Still referring to Fig. 2, the method M further comprises under M3 pressing together the plurality of matrix material filaments 5 with the spread tow tape 1 at the merging station 4. The plurality of matrix material filaments 5 are pressed together with the spread tow tape 1 between two pressing plates 12a, 12b.

Still referring to Fig. 2, the method M further comprises under M4 heating the spread tow tape 1 together with the plurality of matrix material filaments 5 at the merging station 4 to a melting temperature T of the matrix material filaments 5 to form an impregnated fiber ply 7. The spread tow tape 1 is heated together with the plurality of matrix material filaments 5 by a laser beam 19. The laser beam 19 is transmitted on the spread tow tape 1 and the plurality of matrix material filaments 5 by passing through at least one of the two pressing plates 12a, 12b. For this purpose, at least one of the pressing plates 12a, 12b is formed transparently to transmit the laser beam 19. In the embodiment of Figs. 1a and 1b the right hand side pressing plate 12b may be particularly configured as a transparent plate, e.g. a glass plate, while the left hand side pressing plate 12a may be metal plate or the like. However, in principle both pressing plates 12, 12b may be formed as glass plates, e.g. in an embodiment with more than one laser 2, for example with one laser on each side of the merging station 4.

Hence, by applying pressure and temperature on the matrix material filaments 5 and the spread tow tape 1 within the merging station 4, the individual filaments 5 are merged with the spread tow tape 1 to form an impregnated fiber ply of uncured, that is unconsolidated, matrix material, e.g. a thermoplastic, and reinforcing fibers, e.g. carbon fibers.

Still referring to Fig. 2, the method M further comprises under M5 depositing the impregnated fiber ply 7 with a print head 16 in composite layers 8 onto a print bed 9 to form the fiber reinforced composite component 10. The impregnated fiber ply 7 is deposited by pressing down the impregnated fiber ply 7 with an ironing device 13. The ironing device 13 may particularly be heated such that the matrix material within the impregnated fiber ply 7 is kept in a molten or fluid condition, such that when the impregnated fiber ply 7 is pressed against the print bed 9 and the already deposited fiber reinforced material a smooth, unbroken buildup of a fiber reinforced component 10 without any (unwanted) gaps, voids or cavities or the like is formed. As shown in Fig. 1b, the 3D printer 100 provides a cutting device 11 upstream of the ironing device 13, i.e. between the merging station 4 and the ironing device 13, which is configured to cut off the impregnated fiber ply above or at the ironing device 13. The deposited material may subsequently consolidate to form a finished fiber reinforced component 10.

Referring further to Fig. 1b, an automated quality control system 20 is provided with the 3D printer 100. The quality control system 20 is configured to assess at least one quality parameter P1 of the 3D-printing process of the 3D printer 100 and to control the 3D printer 100 based on the at least one quality parameter P1. To this end, the automated quality control system 20 includes a control device 21 and sensor device 22. The sensor device 22 is configured to record sensor data S of the 3D-printing process 100. The control device 21 on the other hand is configured to determine and evaluate the at least one quality parameter P1 of the 3D-printing process based on the recorded sensor data S and, if the evaluated at least one quality parameter P1 matches or deviates from predefined printing constraints P0, to control the 3D printer 100 based on the evaluation of the at least one quality parameter P1. The sensor device 22 may for example be configured as an infrared sensor, an acoustic sensor, a visual sensor, an acceleration sensor, a heat sensor, a triangulation sensor, etc. The sensor data S consequently may be correspondingly recorded data, e.g. a thermal infrared image, a measured temperature, etc. The at least one quality parameter P1 may for example be a single analysis parameter or variable based on specific sensor data S. However, the quality parameter P1 may also be one or several multivariate analysis quantities derived from a multitude of different sensor inputs. In one particular embodiment the quality parameter may correspond to a quality prediction parameter or similar that may serve as a basis for a decision taken by the automated quality control system 20 on how to proceed with the printing process. For example, the automated quality control system 20 may overlay simulated built process information with real (i.e. measured) information to establish if the real values deviate from the ideal or simulated values and possibly control the 3D printer 100 based on this result, e.g. stop the 3D printer 100 in case of an error, thus effectively implementing a feedback control.

The method M may further comprise under M02 the optional step of preheating the print bed 9 with a print bed heating 18. The heated print bed 9 may improve the printing quality as warping and similar unwanted deformations of the fiber composite component 10 may be avoided. Printing on a heated bed allows the printed part to stay warm during the printing process and allow more even shrinking of the plastic as it cools below the melting point. Heated beds usually yield higher quality finished builds.

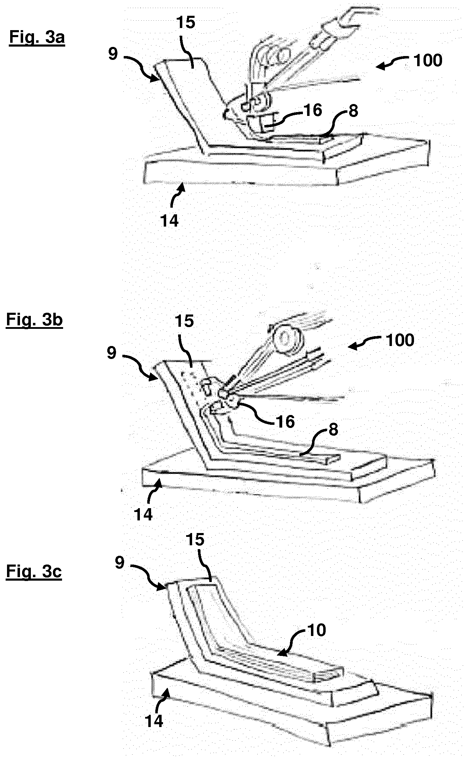

The method M shown in Fig. 2 comprises under M01 the step of forming the print bed 9 on a print table 14 using an AM or 3D printing technique. Accordingly, the 3D printer 100 further comprises a secondary print head 17 (not depicted) configured to form the print bed 9 on a print table 14 using an AM technique. The print bed 9 serves as a support bed for the subsequent or simultaneous printing of the fiber reinforced component 10. The print bed 9 may either be printed in advance of the actual printing of the fiber reinforced component 10 or, alternatively, it may be printed simultaneously. Referring now to Figs. 3a-3c, the secondary print head 17 (not shown) may be a completely standalone print head mechanically separated from the primary print head 16. Hence, the print bed 9 may be printed in advance to the printing of the actual component with the primary print head 16. Fig. 3a in this respect shows a print table 14, whereupon the print bed 9 was printed. The print bed 9, may be formed from a plastic or metal material on top of the print table 14. For example, the secondary print head 17 may be configured as a FDM print head or similar, which is able to form a three dimensional plastic or metal component without fiber reinforcements. The print bed 9 may thus be printed in angled or curved configurations, which in turn facilitates subsequent printing of the fiber reinforced component 10 with fibers oriented into general, three dimensional directions along the preprinted print bed 9 (shown in Figs. 3a to 3c). To this end, the primary print head 16 may be configured tiltably such that the impregnated fiber ply 7 can be deposited on the print bed 9 along a curved or angled deposition surface 15 of the print bed 9.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### List of reference signs

- 1: spread tow tape
- 2: laser
- 3, 3': tape supply
- 4: merging station
- 5: matrix material filaments
- 6: multi-filament supply
- 7: impregnated fiber ply
- 8: composite layer
- 9: print bed
- 10: fiber reinforced component
- 11: cutting device
- 12a, 12b: pressing plate
- 13: ironing device
- 14: print table
- 15: deposition surface
- 16: primary print head
- 17: secondary print head
- 18: print bed heating
- 19: laser beam
- 20: quality control system
- 21: control device
- 22: sensor device
- 100: 3D printer
- T: melting temperature
- P0: printing constraint
- P1: quality parameter
- S: sensor data
- M: 3D-printing method
- M01: method step
- M02: method step
- M1: method step
- M2: method step
- M3: method step
- M4: method step
- M5: method step

## Claims

1. 3D-printing method (M) for manufacturing a fiber reinforced composite component (10) using the 3D printer (100) of claim 7, the method (M) comprising:
preforming (M01) with the secondary print head (17) a print bed (9) on the print table (14) using an additive manufacturing or 3D printing technique;
supplying (M1) the spread tow tape (1) containing a plurality of reinforcing fibers from a tape supply (3, 3') to the merging station (4);
supplying (M2) a plurality of matrix material filaments (5) from the multi-filament supply (6) to the merging station (4);
pressing (M3) together the plurality of matrix material filaments (5) with the spread tow tape (1) at the merging station (4);
heating (M4) the spread tow tape (1) together with the plurality of matrix material filaments (5) at the merging station (4) to a melting temperature (T) of the matrix material filaments (5) to form an impregnated fiber ply (7); and
depositing (M5) with the primary print head (16) the impregnated fiber ply (7) in composite layers (8) onto the print bed (9) to form the fiber reinforced composite component (10).

2. Method (M) according to claim 1, wherein the spread tow tape (1) is heated together with the plurality of matrix material filaments (5) by a laser beam (19).

3. Method (M) according to one of the preceding claims, wherein the plurality of matrix material filaments (5) are pressed together with the spread tow tape (1) between two pressing plates (12a, 12b).

4. Method (M) according to claim 3, wherein the laser beam (19) is transmitted to the spread tow tape (1) and the plurality of matrix material filaments (5) by passing through at least one of the two pressing plates (12a, 12b).

5. Method (M) according to one of the preceding claims, wherein the impregnated fiber ply (7) is deposited by pressing down the impregnated fiber ply (7) with an ironing device (13).

6. Method (M) according to one of the preceding claims, wherein the impregnated fiber ply (7) is deposited in the composite layers (8) onto the print bed (9) by moving along a curved deposition surface (15) of the print bed (9).

7. 3D printer (100) for manufacturing a fiber reinforced composite component (10), the 3D printer (100) comprising:
a tape supply (3, 3') configured to supply a spread tow tape (1) containing a plurality of reinforcing fibers;
a multi-filament supply (6) configured to supply a plurality of matrix material filaments (5);
a merging station (4) configured to receive the spread tow tape (1) from the tape supply (3, 3'), to receive a plurality of matrix material filaments (5) from the multi-filament supply (6), to press together the plurality of matrix material filaments (5) with the spread tow tape (1), and to heat the spread tow tape (1) together with the plurality of matrix material filaments (5) to a melting temperature (T) of the matrix material filaments (5) to form an impregnated fiber ply (7);
a primary print head (16) configured to receive the impregnated fiber ply (7) from the merging station (4) and to deposit the impregnated fiber ply (7) in composite layers (8) onto a print bed (9) to form the fiber reinforced composite component (10); and
a secondary print head (17) configured to form the print bed (9) on a print table (14) using an additive manufacturing or 3D-printing technique.

8. 3D printer (100) according to claim 7, further comprising:
a laser (2) configured and arranged to transmit a laser beam (19) onto the spread tow tape (1) and the plurality of matrix material filaments (5) within the merging station (4) to heat the spread tow tape (1) and the plurality of matrix material filaments (5).

9. 3D printer (100) according to claim 7 or 8, further comprising:
two pressing plates (12a, 12b) configured and arranged to press together the plurality of matrix material filaments (5) with the spread tow tape (1) within the merging station (4).

10. 3D printer (100) according to one of the claims 7 to 9, wherein at least one of the pressing plates (12a, 12b) is formed transparently to transmit the laser beam (19).

11. 3D printer (100) according to one of the claims 7 to 10, wherein the primary print head (16) includes an ironing device configured to press down the impregnated fiber ply (7) onto the print bed (9).

12. 3D printer (100) according to one of the claims 7 to 11, wherein the primary print head (16) is configured tiltably such that the impregnated fiber ply (7) can be deposited on the print bed (9) along a curved deposition surface (15) of the print bed (9).

13. 3D printer (100) according to one of the claims 7 to 12, wherein the matrix material filaments (5) are formed from a thermoplastic material, and/or wherein the spread tow tapes (1) consist of a plurality of dry reinforcing fibers, each reinforcing fiber being selected from the group consisting of carbon fibers, aramid fibers and glass fibers.

## Patentansprüche

1. 3D-Druckverfahren (M) zur Herstellung einer faserverstärkten Verbundkomponente (10) unter Verwendung des 3D-Druckers (100) nach Anspruch 7, wobei das Verfahren (M) Folgendes umfasst:
Vorformen (M01) eines Druckbetts (9) auf dem Drucktisch (14) mit dem sekundären Druckkopf (17) unter Verwendung einer additiven Herstellungs- oder 3D-Drucktechnik;
Zuführen (M1) des Spreizschleppbands (1), das mehrere Verstärkungsfasern enthält, von einer Bandzuführung (3, 3') zu der Verschmelzungsstation (4) ;
Zuführen (M2) mehrerer Matrixmaterialfilamente (5) von der Mehrfach-Filamentzuführung (6) zu der Verschmelzungsstation (4);
Zusammendrücken (M3) der mehreren Matrixmaterialfilamente (5) mit dem Spreizschleppband (1) in der Verschmelzungsstation (4);
Erwärmen (M4) des Spreizschleppbands (1) zusammen mit den mehreren Matrixmaterialfilamenten (5) in der Verschmelzungsstation (4) auf eine Schmelztemperatur (T) der Matrixmaterialfilamente (5) zur Bildung einer imprägnierten Faserlage (7); und
Abscheiden (M5) der imprägnierten Faserlage (7) mit dem primären Druckkopf (16) in Verbundschichten (8) auf das Druckbett (9) zur Bildung der faserverstärkten Verbundkomponente (10) .

2. Verfahren (M) nach Anspruch 1, wobei das Spreizschleppband (1) durch einen Laserstrahl (19) zusammen mit den mehreren Matrixmaterialfilamenten (5) erwärmt wird.

3. Verfahren (M) nach einem der vorhergehenden Ansprüche, wobei die mehreren Matrixmaterialfilamente (5) zwischen zwei Andruckplatten (12a, 12b) mit dem Spreizschleppband (1) zusammengedrückt werden.

4. Verfahren (M) nach Anspruch 3, wobei der Laserstrahl (19) auf das Spreizschleppband (1) und die mehreren Matrixmaterialfilamente (5) gesendet wird, indem er durch mindestens eine der zwei Andruckplatten (12a, 12b) verläuft.

5. Verfahren (M) nach einem der vorhergehenden Ansprüche, wobei die imprägnierte Faserlage (7) durch Herunterdrücken der imprägnierten Faserlage (7) mit einer Bügelvorrichtung (13) abgeschieden wird.

6. Verfahren (M) nach einem der vorhergehenden Ansprüche, wobei die imprägnierte Faserlage (7) in den Verbundschichten (8) auf das Druckbett (9) durch Bewegung entlang einer gekrümmten Abscheidungsoberfläche (15) des Druckbetts (9) abgeschieden wird.

7. 3D-Drucker (100) zur Herstellung einer faserverstärkten Verbundkomponente (10), wobei der 3D-Drucker (100) Folgendes umfasst:
eine Bandzuführung (3, 3'), ausgelegt zum Zuführen eines Spreizschleppbands (1), das mehrere Verstärkungsfasern enthält;
eine Mehrfach-Filamentzuführung (6), ausgelegt zum Zuführen mehrerer Matrixmaterialfilamente (5);
eine Verschmelzungsstation (4), ausgelegt zum Empfangen des Spreizschleppbands (1) von der Bandzuführung (3, 3'), zum Empfangen mehrerer Matrixmaterialfilamente (5) von der Mehrfach-Filamentzuführung (6), zum Zusammendrücken der mehreren Matrixmaterialfilamente (5) mit dem Spreizschleppband (1) und zum Erwärmen des Spreizschleppbands (1) zusammen mit den mehreren Matrixmaterialfilamenten (5) auf eine Schmelztemperatur (T) der Matrixmaterialfilamente (5) zur Bildung einer imprägnierten Faserlage (7);
einen primären Druckkopf (16), ausgelegt zum Empfangen der imprägnierten Faserlage (7) von der Verschmelzungsstation (4) und zum Abscheiden der imprägnierten Faserlage (7) in Verbundschichten (8) auf ein Druckbett (9) zur Bildung der faserverstärkten Verbundkomponente (10); und
einen sekundären Druckkopf (17), ausgelegt zum Formen des Druckbetts (9) auf einem Drucktisch (14) unter Verwendung einer additiven Herstellungs- oder 3D-Drucktechnik.

8. 3D-Drucker (100) nach Anspruch 7, ferner umfassend:
einen Laser (2), ausgelegt und angeordnet zum Senden eines Laserstrahls (19) auf das Spreizschleppband (1) und die mehreren Matrixmaterialfilamente (5) in der Verschmelzungsstation (4), um das Spreizschleppband (1) und die mehreren Matrixmaterialfilamente (5) zu erwärmen.

9. 3D-Drucker (100) nach Anspruch 7 oder 8, ferner umfassend:
zwei Andruckplatten (12a, 12b), ausgelegt und angeordnet zum Zusammendrücken der mehreren Matrixmaterialfilamente (5) mit dem Spreizschleppband (1) in der Verschmelzungsstation (4).

10. 3D-Drucker (100) nach einem der Ansprüche 7 bis 9, wobei mindestens eine der Andruckplatten (12a, 12b) transparent gebildet wird, um den Laserstrahl (19) durchzulassen.

11. 3D-Drucker (100) nach einem der Ansprüche 7 bis 10, wobei der primäre Druckkopf (16) eine Bügelvorrichtung umfasst, die dafür ausgelegt ist, die imprägnierte Faserlage (7) auf das Druckbett (9) herunterzudrücken.

12. 3D-Drucker (100) nach einem der Ansprüche 7 bis 11, wobei der primäre Druckkopf (16) neigbar ausgelegt ist, so dass die imprägnierte Faserlage (7) entlang einer gekrümmten Abscheidungsoberfläche (15) des Druckbetts (9) auf dem Druckbett (9) abgeschieden werden kann.

13. 3D-Drucker (100) nach einem der Ansprüche 7 bis 12, wobei die Matrixmaterialfilamente (5) aus einem thermoplastischen Material gebildet werden und/oder wobei die Spreizschleppbänder (1) aus mehreren Trocken-Verstärkungsfasern bestehen, wobei jede Verstärkungsfaser aus der Gruppe bestehend aus Kohlefasern, Aramidfasern und Glasfasern ausgewählt ist.

## Revendications

1. Procédé d'impression 3D (M) pour la fabrication d'un composant composite renforcé de fibres (10) utilisant l'imprimante 3D (100) selon la revendication 7, le procédé (M) comprenant :
le préformage (M01) avec la tête d'impression secondaire (17) l'un lit d'impression (9) sur la table d'impression (14) en utilisant une technique de fabrication additive ou d'impression 3D ;
la fourniture (M1) de la bande d'étalement (1) contenant une pluralité de fibres de renforcement à partir d'une alimentation en bande (3, 3') à la station de fusion (4) ;
la fourniture (M2) d'une pluralité de filaments de matériau de matrice (5) à partir de l'alimentation multi-filaments (6) à la station de fusion (4) ;
le pressage (M3) ensemble de la pluralité de filaments de matériau de matrice (5) avec la bande d'étalement (1) au niveau de la station de fusion (4) ;
le chauffage (M4) de la bande d'étalement (1) ensemble avec la pluralité de filaments de matériau de matrice (5) au niveau de la station de fusion (4) à une température de fusion (T) des filaments de matériau de matrice (5) pour former une nappe de fibres imprégnées (7) ; et
le dépôt (M5) avec la tête d'impression primaire (16) de la nappe de fibres imprégnées (7) en couches composites (8) sur le lit d'impression (9) pour former le composant composite renforcé de fibres (10).

2. Procédé (M) selon la revendication 1, la bande d'étalement (1) étant chauffée ensemble avec la pluralité de filaments de matériau de matrice (5) par un faisceau laser (19).

3. Procédé (M) selon l'une des revendications précédentes, la pluralité de filaments de matériau de matrice (5) étant pressés ensemble avec la bande d'étalement (1) entre deux plaques de pressage (12a, 12b) .

4. Procédé (M) selon la revendication 3, le faisceau laser (19) étant transmis à la bande d'étalement (1) et à la pluralité de filaments de matériau de matrice (5) en passant à travers au moins l'une des deux plaques de pressage (12a, 12b).

5. Procédé (M) selon l'une des revendications précédentes, la nappe de fibres imprégnées (7) étant déposée par pression de la nappe de fibres imprégnées (7) avec un dispositif de repassage (13).

6. Procédé (M) selon l'une des revendications précédentes, la nappe de fibres imprégnées (7) étant déposée dans les couches composites (8) sur le lit d'impression (9) en se déplaçant le long d'une surface de dépôt courbe (15) du lit d'impression (9).

7. Imprimante 3D (100) pour fabriquer un composant composite renforcé de fibres (10), l'imprimante 3D (100) comprenant :
une alimentation en bande (3, 3') configurée pour fournir une bande d'étalement (1) contenant une pluralité de fibres de renforcement ;
une alimentation multi-filaments (6) configurée pour fournir une pluralité de filaments de matériau de matrice (5) ;
une station de fusion (4) configurée pour recevoir la bande d'étalement (1) à partir de l'alimentation en bande (3, 3'), pour recevoir une pluralité de filaments de matériau de matrice (5) à partir de l'alimentation multi-filaments (6), pour presser ensemble la pluralité de filaments de matériau de matrice (5) avec la bande d'étalement (1), et pour chauffer la bande d'étalement (1) ensemble avec la pluralité de filaments de matériau de matrice (5) à une température de fusion (T) des filaments de matériau de matrice (5) pour former une nappe de fibres imprégnées (7) ;
une tête d'impression primaire (16) configurée pour recevoir la nappe de fibres imprégnées (7) à partir de la station de fusion (4) et pour déposer la nappe de fibres imprégnées (7) en couches composites (8) sur un lit d'impression (9) pour former le composant composite renforcé de fibres (10) ; et
une tête d'impression secondaire (17) configurée pour former le lit d'impression (9) sur une table d'impression (14) en utilisant une technique de fabrication additive ou d'impression 3D.

8. Imprimante 3D (100) selon la revendication 7, comprenant en outre :
un laser (2) configuré et agencé pour transmettre un faisceau laser (19) sur la bande d'étalement (1) et la pluralité de filaments de matériau de matrice (5) dans la station de fusion (4) pour chauffer la bande d'étalement (1) et la pluralité de filaments de matériau de matrice (5).

9. Imprimante 3D (100) selon la revendication 7 ou 8, comprenant en outre :
deux plaques de pressage (12a, 12b) configurées et agencées pour presser ensemble la pluralité de filaments de matériau de matrice (5) avec la bande d'étalement (1) dans la station de fusion (4).

10. Imprimante 3D (100) selon l'une des revendications 7 à 9, au moins l'une des plaques de pressage (12a, 12b) étant formée de manière transparente pour transmettre le faisceau laser (19).

11. Imprimante 3D (100) selon l'une des revendications 7 à 10, la tête d'impression primaire (16) comprenant un dispositif de repassage configuré pour presser la nappe de fibres imprégnées (7) sur le lit d'impression (9).

12. Imprimante 3D (100) selon l'une des revendications 7 à 11, la tête d'impression primaire (16) étant configurée basculante de telle sorte que la nappe de fibres imprégnée (7) peut être déposée sur le lit d'impression (9) le long d'une surface de dépôt courbe (15) du lit d'impression (9).

13. Imprimante 3D (100) selon l'une des revendications 7 à 12, les filaments de matériau de matrice (5) étant formés à partir d'un matériau thermoplastique, et/ou les bandes d'étalement (1) consistant en une pluralité de fibres de renforcement sèches, chaque fibre de renforcement étant choisie dans le groupe constitué des fibres de carbone, des fibres d'aramide et des fibres de verre.
